# EUROPÄISCHE PATENTSCHRIFT

(11) **EP 0 942 514 B1**
(45) Veröffentlichungstag und Bekanntmachung des Hinweises auf die Patenterteilung: **29.12.2004**
(21) Anmeldenummer: 99890064.1
(22) Anmeldetag: 23.02.1999
(51) Int. Cl.: H02K 7/14, H02K 5/00

(54) **Elektromotor mit Flanschring**
Electric motor with annular flange
Moteur électrique avec bride annulaire

(30) Priorität: 10.03.1998 AT 41998
(43) Veröffentlichungstag der Anmeldung: 15.09.1999
(73) Patentinhaber: ATB Austria Antriebstechnik Aktiengesellschaft, 8724 Spielberg (Steiermark) (AT)
(72) Erfinder: Sommer, Rudolf, 8715 St. Lorenzen 94/3 (AT); Mlinar, Daniel, 8862 St. Ruprecht ob. Murau 2/4 (AT)
(74) Vertreter: Beer, Manfred, Dipl.-Ing.

(56) Entgegenhaltungen:
- WO-A-98/31965
- GB-A- 2 079 404
- US-A- 4 811 616
- US-A- 5 281 878
- US-A- 5 760 513
- DAVE CANNON: "Mating Motors and Gearheads" MACHINE DESIGN, 6. Februar 1992 (1992-02-06), Seiten 50-54, XP000294610

## Beschreibung

Die Erfindung betrifft einen Elektromotor, insbesondere einen Norm-Motor, an dessen abtriebsseitigem Trägerlagerschild ein Flanschring befestigt ist, über den der Elektromotor mit einer Maschine verbunden werden kann gemäß dem Oberbegriffs von Anspruch 1.

Um ein und denselben Motor an unterschiedlichen Maschinen befestigen zu können, ist es bekannt, am Trägerlagerschild des Motors einen jeweils passenden Flanschring zu befestigen, wobei der passende Flanschring aus einer Serie von mehreren Flanschringen ausgewählt wird ("Flansch-Modul-System"). Dies ist in den Dokumenten GB-A-2 079 404, US-A-4 811 616 oder US-A-5 281 878 bekannt.

Ohne dieses bekannte System von Flanschringen ist es beispielsweise für vier Baugrößen von Norm-Elektromotoren erforderlich, 143 Normflansche vorzusehen, von welchen der jeweils passende mit dem Lagerschild kombiniert wird. Bei dem bekannten System von Flanschringen sind lediglich so viele Trägerlagerschilde erforderlich, als Baugrößen von Motoren vorgesehen sind. Beispielsweise genügen vier Trägerlagerschilde für vier Baugrößen von Elektromotoren (beispielsweise: Baugröße 80, Baugröße 71, Baugröße 63 und Baugröße 56).

Bei all diesen Trägerlagerschilden der bekannten Flansch-Modul-Systeme sind die Befestigungsmöglichkeiten so ausgewählt, daß man beispielsweise mit elf Flanschringen das Auslangen findet, um die verschiedenen Kombinationsmöglichkeiten zu erzielen, für die bisher beispielsweise 143 Normflansche für vier Baugrößen von Norm-Elektromotoren erforderlich waren.

Ein Problem bei den bekannten Flansch-Modul-Systemen ist, daß es die unterschiedlichen Flanschringe erforderlich machen, daß die Welle des Elektromotors an den jeweiligen Flanschring angepaßt werden mußte.

Hier setzt die Erfindung ein und stellt sich die Aufgabe, die Flanschringe so auszubilden, daß das erwähnte Ändern der Welle des Elektromotors nicht mehr erforderlich ist.

Erfindungsgemäß wird diese Aufgabe mit den Merkmalen des Anspruches 1 gelöst.

Bevorzugte und vorteilhafte Ausgestaltungen der Erfindung sind Gegenstand der Unteransprüche.

Mit der Erfindung ist bei allen am Trägerlagerschild des Elektromotors befestigten Flanschringen das sogenannte C-Maß (früher W1-Maß) also der Abstand der vom Motor wegweisenden Fläche des Flanschringes von der Achse der abtriebsseitigen Fußbohrung (also der Bohrung in den abtriebsseitig angeordneten Füßen am Gehäuse des Elektromotors, über die der Elektromotor auf einem Bauteil befestigt wird) gleich groß und kann beispielsweise 50 mm betragen. Dadurch wird gewährleistet, daß die Welle des Elektromotors, die, beispielsweise über eine Paßfeder, mit dem anzutreibenden Maschinenteil verbunden wird, nicht mehr entsprechend dem ausgewählten Flanschring geändert werden muß.

Dennoch bleibt der Vorteil des bekannten Flansch-Modul-Systems weniger Flanschringe sind erforderlich - bei der Erfindung erhalten.

Von besonderem Vorteil kann es bei der Erfindung sein, wenn die Flanschfläche, also die Fläche des am Trägerlagerschild befestigten, ausgewählten Flanschringes mit der Stufe am abtriebsseitigen Ende der Motorwelle (= Welle des Rotors) fluchtet.

Von Vorteil bei einer Ausführungsform der Erfindung ist es, daß das mit dem Statorgehäuse über Schrauben verbundene Trägerlagerschild, an dem der Flanschring zu befestigen ist, mehr als vier Befestigungsaugen aufweist. Durch diese Maßnahme ist es möglich, das Trägerlagerschild in verschiedenen Drehlagen am Statorgehäuse zu befestigen. Beispielsweise können statt wie üblich vier Befestigungsaugen am Trägerlagerschild über dessen Umfang gleichmäßig verteilt acht Befestigungsaugen, die voneinander dann einen Abstand von 45° aufweisen, vorgesehen sein. Auf diese Weise ist es möglich, das Trägerlagerschild am Statorgehäuse in zwei unterschiedlichen Stellungen zu befestigen, die gegeneinander um 45° verdreht sind.

Weitere Einzelheiten, Merkmale und Vorteile der Erfindung ergeben sich aus der nachstehenden Beschreibung, in welcher auf die in den Zeichnungen gezeigten Ausführungsbeispiele Bezug genommen wird. Es zeigt:
Fig. 1 diagrammartig vier Baugrößen von Elektromotoren mit zugehörigen Normflanschen (Stand der Technik),
Fig. 2 ein Flansch-Modul-System mit Lagerschilden und Flanschringen (Stand der Technik),
Fig. 3 die Kombinationsmöglichkeit eines Elektromotors mit Trägerlagerschild und vier Flanschringen,
Fig. 4 einen Elektromotor in Seitenansicht mit an ihm befestigtem Flanschring und
Fig. 5 den Elektromotor aus Fig. 4 von der Abtriebsseite aus gesehen.

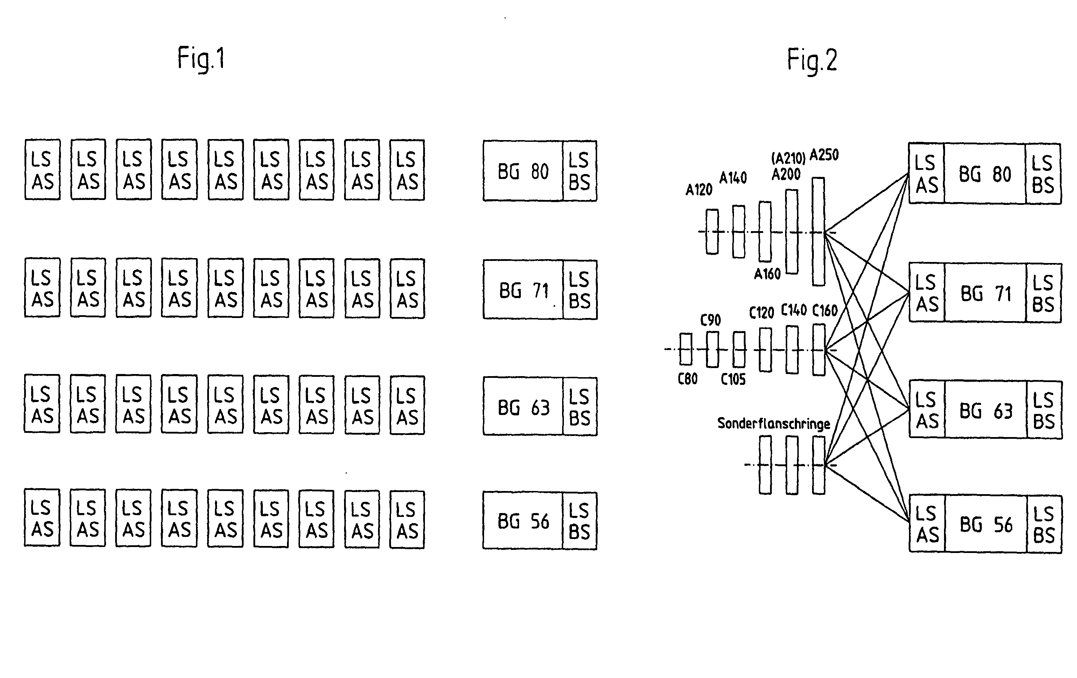

Wie Fig. 1 zeigt, mußten im Stand der Technik für jede von vier Baugrößen von Elektromotoren - in Fig. 1 Baugröße 80, 71, 63 und 56 - eine gesonderte Serie von Lagerschilden vorgesehen sein. Dabei war jedes Lagerschild bzw. jede Gruppe von Lagerschilden lediglich für eine bestimmte Baugröße von Norm-Elektromotoren verwendbar.

Mit dem in Fig. 2 schematisch veranschaulichten Flansch-Modul-System verringert sich die Zahl der vorrätig zu haltenden Bestandteile von Normmotoren erheblich. Es genügen jetzt vier Lagerschilde, je eines für jede Baugröße des Elektromotors, also ein Lagerschild für die Baugröße 80, ein weiteres für die Baugröße 71, ein drittes für die Baugröße 63 und ein viertes für die Baugröße 56. An diesen Lagerschilden (Trägerlagerschilde) können die jeweils ausgewählten Flanschringe befestigt werden, so daß statt der Vielzahl von Lagerschilden mit Normflanschen bei der Ausführungsform von Normmotoren ohne Flansch-Modul-System (Fig. 1) nunmehr mit weniger Normflanschringen, im Beispiel von Fig. 2 mit elf Normflanschringen, das Auslangen gefunden wird. In Fig. 2 ist auch angedeutet, daß beispielsweise jeder der Flanschringe C80, C90, C105, C120, C140, C160, A120, A140, A200, A250 sowie auch jeder der Sonderflanschringe auf einen beliebigen, abtriebsseitig mit einem Trägerlagerschild versehenen Normmotor befestigt werden kann. Fig. 2 zeigt also, daß nunmehr mit vier Lagerschilden (Trägerlagerschilde) und elf Flanschringen und Sonderflanschringen das Auslangen gefunden wird, wogegen bei dem bisherigen System ohne Flansch-Modul-System z. B. 143 Bauteile vorrätig gehalten werden mußten.

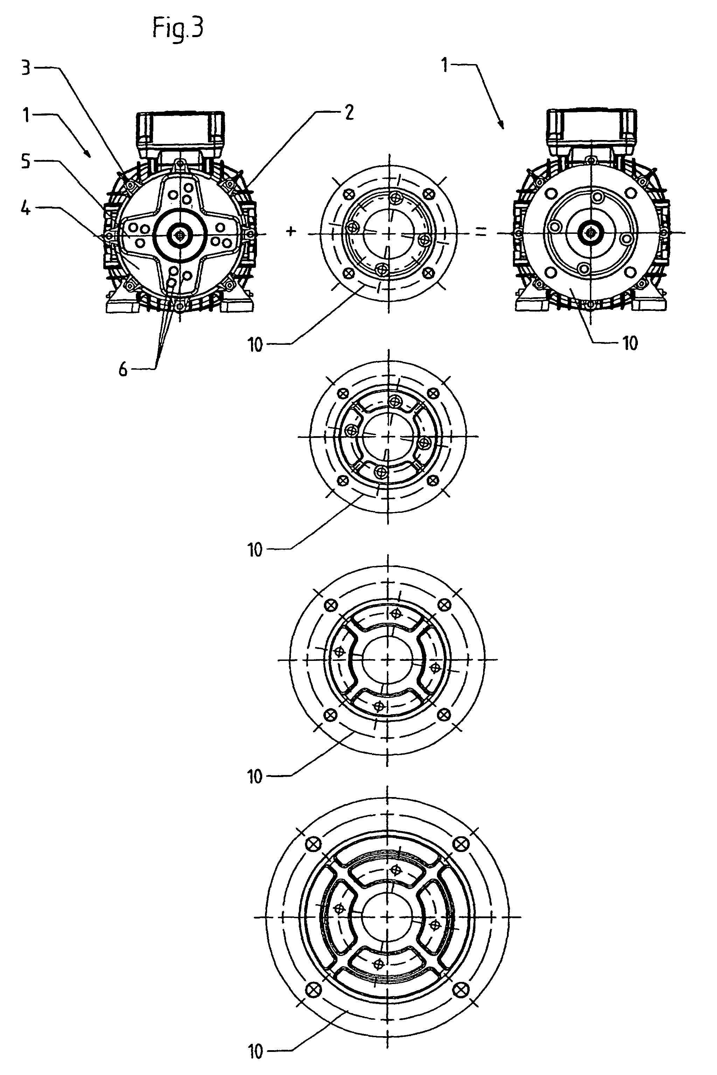

Fig. 3 zeigt von der Abtriebsseite aus gesehen einen erfindungsgemäß ausgebildeten (Norm-)Elektromotor 1, an dessen Statorgehäuse 2 abtriebsseitig über Befestigungsaugen 3 ein Trägerlagerschild 4 befestigt ist.

Fig. 3 zeigt, daß das Trägerlagerschild 4 insgesamt acht Befestigungsaugen 3 aufweist, wovon jeweils vier in den Ecken eines Quadrates liegende Befestigungsaugen 3 für das Befestigen des Trägerlagerschildes 4 am Statorgehäuse 2 des Elektromotors 1 herangezogen werden. Es ist ersichtlich, daß das Trägerlagerschild 4 wegen der insgesamt acht Befestigungsaugen 3, die am Trägerlagerschild 4 ausgebildet sind, am Elektromotor 1 in zwei zueinander um 45° versetzten Stellungen befestigt werden kann.

In der vom Elektromotor 1 weg weisenden Endfläche 5 des Trägerlagerschildes 4, die etwa sternförmig ausgebildet ist, sind mehrere Gewindebohrungen 6 für das Befestigen des jeweils ausgewählten Flanschringes 10 - in Fig. 3 sind vier verschiedene Ausführungsformen von Flanschringen 10 gezeigt - vorgesehen. Fig. 3 zeigt rechts oben, von der Abtriebsseite aus gesehen, einen Elektromotor 1 mit einem am Trägerlagerschild 4 befestigten Flanschring 10.

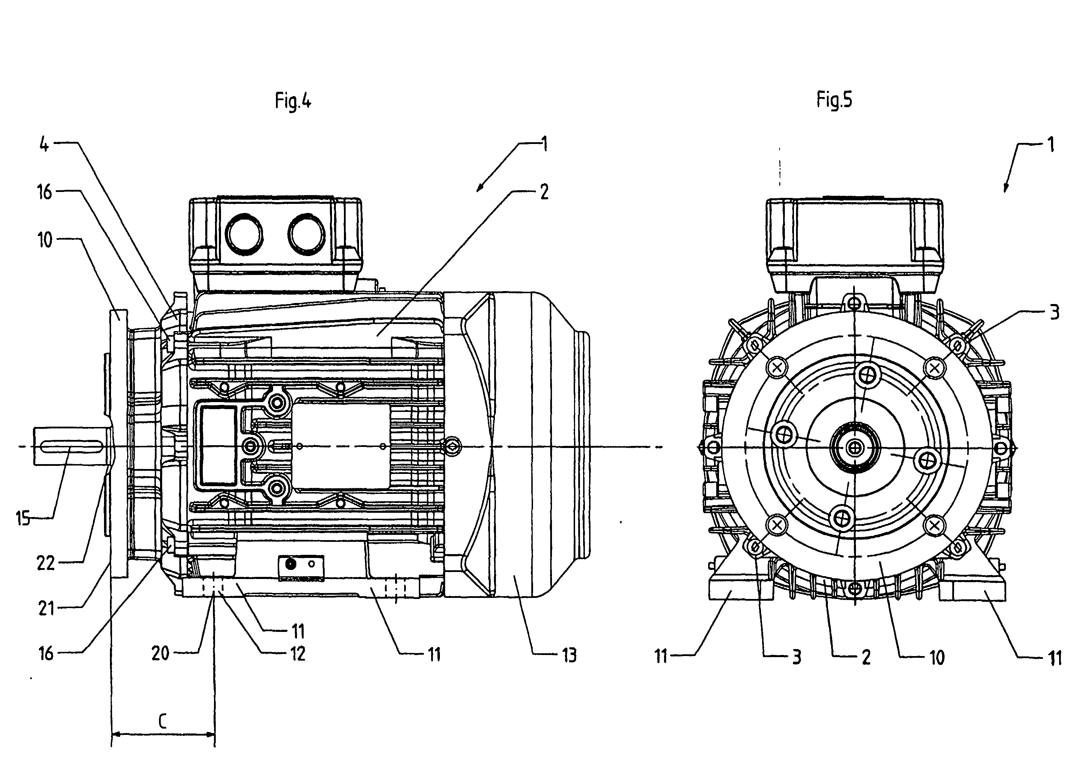

Die Fig. 4 und 5 zeigen in Seitenansicht einen Elektromotor mit einem über sein Trägerlagerschild 4 montierten Flanschring 10.

Der Elektromotor 1 besitzt in üblicher Weise an seinem Statorgehäuse 2 vier Füße 11 mit Fußbohrungen 12, die dazu dienen, den Elektromotor 1 an einen Bauteil, z.B. in oder an einer Maschine zu befestigten.

Die in Fig. 4 rechts liegende Belüftungsseite des Elektromotors 1 trägt eine Schutzhaube 13 für das (nicht sichtbare) Lüfterrad, das mit der Welle 15 des Elektromotors 1 verbunden ist.

Abtriebsseitig ist das Trägerlagerschild 4 mit vier Befestigungsschrauben 16 am Statorgehäuse 2 befestigt. Die Befestigungsschrauben 16 können gleichzeitig auch das belüftungsseitige Lagerschild, das in Fig. 3 nicht sichtbar ist, am Statorgehäuse 2 befestigen.

Am Trägerlagerschild 4 ist ein Flanschring 10 befestigt, der aus einer Gruppe von Flanschringen (Normflanschringe, Fig. 3) ausgewählt worden ist und der hinsichtlich Größe und Anordnung der in ihm vorgesehenen Bohrungen dem anzutreibenden Teil der Maschine entspricht.

Fig. 4 zeigt, daß die Achsen 20 der Fußbohrungen 12 in den abtriebsseitig angeordneten (in Fig. 4 links angeordneten) Füßen 11 des Statorgehäuses 2 von der vom Motor 1 weg weisenden Flanschfläche 21 des Flanschringes den Abstand C aufweist. Dieses Maß, das sogenannte "C-Maß" (früher "W1-Maß") ist für Norm-Elektromotore vorgegeben und beträgt 50 mm für den in Fig. 4 gezeigten Norm-Elektromotor der Baugröße 80.

Bei dem erfindungsgemäßen Flansch-Modul-System sind alle Flanschringe 10, die für das Befestigen am Trägerlagerschild 4 vorgesehen sind, so ausgebildet, daß ihre vom Motor 1 weg weisende Flanschfläche 21 von der Achse 20 der abtriebsseitigen Fußbohrung 12 einen Abstand aufweist, der dem C-Maß entspricht. Zusätzlich ist, wie in Fig. 4 gezeigt, die Stufe 22 am abtriebsseitigen Ende der Motorwelle 15 in der Ebene angeordnet, in der auch die vom Motor 1 weg weisende Flanschfläche 21 des Flanschringes 10 liegt.

Durch diese Maßnahme, nämlich ein konstantes C-Maß, also ein für alle Flanschringe 10 gleicher Abstand der Flanschfläche 21 von der Achse 20 der abtriebsseitigen Fußbohrung 12 einerseits und dem Umstand, daß die Stufe 22 auf dem abtriebsseitigen Ende der Motorwelle 15 in der von der Flanschfläche 21 definierten Ebene liegt, wird nicht nur das durch die Norm vorgegebene C-Maß eingehalten, sondern es ist auch nicht mehr erforderlich, daß wie bei dem bekannten Flansch-Modul-System (Fig. 2) die Motorwelle 15 an den jeweils ausgewählten Flanschring 10 angepaßt wird.

Fig. 5 zeigt, daß am Trägerlagerschild 4 acht Befestigungsaugen 3 vorgesehen sind, wovon jeweils vier zum Befestigen des Trägerlagerschildes 4 am Motor 1 herangezogen werden, so daß das Trägerlagerschild 4 in zwei zueinander um 45° versetzten Stellungen am Motor 1 befestigt werden kann. Dadurch ist eine weitere Anpassungsmöglichkeit des Elektromotors 1 mit dem erfindungsgemäßen Flanschring 10 an die Einbauverhältnisse und die Konstruktion der vom Motor 1 anzutreibenden Maschine möglich.

Zusammenfassend kann ein Ausführungsbeispiel der Erfindung wie folgt beschrieben werden:

Am Statorgehäuse 1 eines Elektromotors 1 ist abtriebsseitig ein Trägerlagerschild 4 befestigt. An dem Trägerlagerschild 4 ist ein Flanschring 10 aus einer Gruppe von unterschiedlichen Flanschringen 10 befestigt. Der Abstand (C-Maß), der vom Motor 1 weg weisenden Flanschfläche 21 jedes Flanschringes 10 aus der Gruppe von Flanschringen 10 von der Achse 20 der abtriebsseitigen Fußbohrungen 12 ist für alle Flanschringe 10 gleich groß. Die Stufe 22 am abtriebsseitigen Ende der Motorwelle 15 liegt in der durch die vom Motor 1 weg weisende Flanschfläche 21 jedes Flanschringes 10 definierten Ebene.

## Patentansprüche

1. Elektromotor (1), insbesondere Normelektromotor, an dessen Statorgehäuse (1) abtriebsseitig ein Trägerlagerschild (4) befestigt ist, an welchem Trägerlagerschild (4) ein Flanschring (10) aus einer Gruppe von unterschiedlichen Flanschringen (10) befestigt ist, wobei am Statorgehäuse (2) des Motors (1) lüftungsseitig und abtriebsseitig Füße (11) mit Fußbohrungen (12) zum Befestigen des Motors (1) angeformt sind, **dadurch gekennzeichnet, daß** der Abstand (C) der vom Motor (1) wegweisenden Flanschfläche (21) jedes Flanschringes (10) aus der Gruppe von Flanschringen (10) von der Achse (20) der Fußbohrungen (12) in den abtriebsseitigen Füßen (11) gleich groß ist.

2. Motor nach Anspruch 1, **dadurch gekennzeichnet, daß** der Abstand der Flanschfläche (21) von der Achse (20) der Fußbohrungen (12) in den abtriebsseitigen Füßen (11) dem C-Maß von Normmotoren entspricht und beispielsweise 50 mm beträgt.

3. Motor nach Anspruch 1 oder 2, **dadurch gekennzeichnet, daß** die Stufe (22) am abtriebsseitigen Ende der Motorwelle (15) in einer durch die vom Motor (1) weg weisende Flanschfläche (21) jedes Flanschringes (10) der Gruppe von Flanschringen (10) definierten Ebene liegt.

4. Motor nach einem der Ansprüche 1 bis 3, bei dem das Trägerlagerschild (4) über an ihm angeformte Befestigungsaugen (3) durch parallel zur Achse der Motorwelle (15) ausgerichtete Schrauben (16) mit dem Statorgehäuse (2) verbunden ist, **dadurch gekennzeichnet, daß** am Trägerlagerschild (4) mehr Befestigungsaugen (3) als Schrauben (16) vorgesehen sind.

5. Motor nach Anspruch 4, **dadurch gekennzeichnet, daß** die Befestigungsaugeri (3) über den Umfang des Trägerlagerschildes (4) gleichmäßig verteilt angeordnet sind.

6. Motor nach einem der Ansprüche 1 bis 5, **dadurch gekennzeichnet, daß** bei vier Schrauben (16) am Trägerlagerschild (4) acht über den Umfang des Trägerlagerschildes (4) gleichmäßig verteilt angeordnete, voneinander einen Abstand von 45° aufweisende Befestigungsaugen (3) vorgesehen sind.

## Claims

1. Electric motor (1), especially a standard electric motor, on the stator housing (1) of which there is secured a supporting end plate (4) on the drive side, on which supporting end plate (4) there is secured a flange (10) from a group of different flanges (10), feet (11) with foot bores (12) being moulded on the stator housing (2) of the motor (1) on the ventilation side and the drive side for attachment of the motor (1), **characterised in that** the spacing (C) of the flange face (21), facing away from the motor, of each flange (10) from the group of flanges (10) is of equal magnitude measured from the axis (20) of the foot bores (12) in the drive-side feet (11).

2. Motor according to claim 1, **characterised in that** the spacing of the flange face (21) from the axis (20) of the foot bores (12) in the drive-side feet (11) corresponds to the C-measurement of standard motors and is for example 50 mm.

3. Motor according to claim 1 or 2, **characterised in that** the step (22) at the drive-side end of the motor shaft (15) is situated in a plane defined by the flange face (21), facing away from the motor (1), of each flange (10) of the group of flanges (10).

4. Motor according to one of the claims 1 to 3, in which the supporting end plate (4) is connected to the stator housing (2) via fastening lugs (3), which are moulded on said supporting end plate, by means of screws (16) which are aligned parallel to the axis of the motor shaft (15), **characterised in that** more. fastening lugs (3) than screws (16) are provided on the supporting end plate (4).

5. Motor according to claim 4, **characterised in that** the fastening lugs (3) are disposed in uniform distribution over the circumference of the supporting end plate (4).

6. Motor according to one of the claims 1 to 5, **characterised in that** in the case of four screws (16) on the supporting end plate (4) there are provided eight fastening lugs (3) which are disposed in uniform distribution over the circumference of the supporting end plate (4) and have a spacing of 45° from one another.

## Revendications

1. Moteur électrique (1), en particulier moteur électrique standard, à la carcasse du stator (2) duquel est fixée, du côté sortie, une flasque porteuse (4) à laquelle est fixée une bride annulaire (10) choisie dans un groupe de brides annulaires différentes (10), du côté ventilation et du côté sortie étant prévus, sur la carcasse (2) du moteur (1), des pieds (11) avec des trous (12) pour la fixation du moteur (1), **caractérisé en ce que** la distance (C) de la surface de bride (21) de chaque bride annulaire (10), choisie dans le groupe de brides annulaires (10), à l'axe (20) des trous (12) dans les pieds (11) est, du côté sortie, la même.

2. Moteur suivant la revendication 1, **caractérisé en ce que** la distance de la surface de bride (21) à l'axe (20) des trous (12) dans les pieds (11), du côté sortie, correspond à la dimension C de moteurs standard et, par exemple, se monte à 50 mm.

3. Moteur suivant la revendication 1 ou 2, **caractérisé en ce que** le passage (22), à l'extrémité, du côté sortie, de l'arbre (15) du moteur, est dans un plan défini par la surface de bride (21), en direction du moteur (1), de chaque bride annulaire (10) du groupe de brides annulaires (10).

4. Moteur suivant l'une des revendications 1 à 3, dans lequel la flasque porteuse (4) est reliée, à la carcasse (2) du stator, sur des oeillets de fixation (3), prévus sur elle-même, par des vis (16) parallèles à l'axe de l'arbre (15) du moteur, **caractérisé en ce que**, sur la flasque porteuse (4), sont prévus plus d'oeillets de fixation (3) que de vis (16).

5. Moteur suivant la revendication 4, **caractérisé en ce que** les oeillets de fixation (3) sont régulièrement répartis sur la périphérie de la flasque porteuse (4).

6. Moteur suivant l'une des revendications 1 à 5, **caractérisé en ce que**, pour quatre vis (16), sur la flasque porteuse (4), sont prévus huit oeillets de fixation (3) décalés l'un de l'autre de 45°, régulièrement répartis sur la périphérie de la flasque porteuse (4).
